Europäisches Patentamt

European Patent Office

Office européen des brevets

(19)

(11) Publication number: **0 132 360**
A2

# (12) EUROPEAN PATENT APPLICATION

(21) Application number: **84304843.0**

(22) Date of filing: **16.07.84**

(51) Int. Cl.⁴: **C 05 G 1/00**

(30) Priority: **22.07.83 US 516412**

(43) Date of publication of application: **30.01.85**
Bulletin 85/5

(84) Designated Contracting States: **BE CH DE FR GB IT LI NL SE**

(71) Applicant: **STAUFFER CHEMICAL COMPANY, Westport Connecticut 06881 (US)**

(72) Inventor: **Paterson, Karol Elizabeth, 3370 Guido Street, Oakland California 94602 (US)**

(74) Representative: **Smith, Sydney et al, Elkington and Fife High Holborn House 52/54 High Holborn, London WC1V 6SH (GB)**

(54) **Plant growth medium.**

(57) An artificial plant growth medium comprising minimal salts, vitamins, plant hormones, sucrose, and hardening agent at a pH between 5 to 6.5 is suitable for growth of callus, shoot tips and adventitious shoots. This medium factilitates the production of sunflower callus, multiple sunflower shoot tips and adventitious sunflower shoots. Methods of propagation of sunflower plants and plants and seed produced by these methods are also described.

EP 0 132 360 A2

ACTORUM AG

PLANT GROWTH MEDIUM

Field of the Invention

The invention relates to artificial plant growth media and methods of using the media for callus growth, shoot tip multiplication and shoot initiation.

Background of the Invention

Plant propagation from the shoot tips of growing plants is an important horticultural technique long used to insure the morphological uniformity of ornamental plants and standardization of fruit type in orchard crops. From a single shoot tip of a plant having a desirable characteristic, many identical plants all possessing the same desirable characteristic can be obtained using a shoot multiplication system.

The advantages of shoot tip multipliction for the propagation of ornamental plants and orchard crops have been well appreciated in the horticultural arts for a number of years, but the agronomic arts have only recently begun to tap the potential of such propagation methods.

The uses of such propagation methods are many. For example, vegetative propagation may be used for inbred or even hybrid plant strains which have potentially valuable or scientifically interesting characteristics that are unstable when sexually reproduced. In addition, shoot tip propagation has been used to eliminate certain plant viral diseases in growing plant stocks, relying on the observation that a number of plant viruses that infect the plant stem do not infect the growing shoot tip of the same plant.

Shoot tip propagation may also be used to perpetuate chromosomal changes in a plant line. In a heterozygous plant, the mutation of a dominant gene to a recessive state will lead to immediate expression of the recessive condition. If the change is in a detectable characteristic, shoot tips taken from the cultured plant tissue can be propagated asexually to give any number of plants of the new form. In this manner, numerous copies of a single plant, or part of a plant, having an agronomically valuable characteristic can be provided for back crossing into the parent strain or for outbreeding to form new hybrids. Importantly, because many copies of the original plant can be propagated asexually using shoot tip multiplication, such backcrossing and hybridization programs can be undertaken without fear of losing the plant type originally displaying the desirable characteristic.

The inventor has discovered plant growth media which makes it possible to culture Helianthus annuus (H. annuus) in a number of different ways. The fruits or seeds of H. annuus are the commercial source of sunflower seed oil. When one of the media, supplemented with a particular complex of plant hormones and vitamins, is used, multiple shoots may be obtained from explants of H. annuus shoot tips. The term "shoot tip" as used in the specification means shoot apex and all subtending leaf primordia or axillary buds. Moreover and entirely unexpected is the finding that in a number of inbred strains of H. annuus, when the multiple shoots develop leaves, the leaves develop adventitious shoots. This medium is particularly significant since it makes possible the formation of adventitious shoots directly from differentiated tissue, i.e., leaves of a sunflower plant. Thus, the utility of the medium lies in its ability to allow vegetative propagation of an important oil producing crop plant and the manipulation of such vegetative propagules for the purpose of improving the strain.

The inventor has further discovered that a second medium, using a differently formulated complex of vitamins and hormones can be used to form undifferentiated callus from explants of almost all sunflower tissues. As is shown in the examples hereinbelow, callus may be induced on the medium using hypocotyl segments of sunflower seedlings. In addition, tissue from practically any part of the mature sunflower plant including but not limited to for example stem, shoot tip, leaf bud, axillary bud and even stem pith may be used to initiate callus. When this callus is used to inoculate cell suspension cultures in a suspension medium, the growth characteristics of the cells in culture can be correlated with a high degree of confidence with the oil content of the seeds of the whole plant. Thus, the growth of callus is an important step in a method of screening prospective sunflower seed lines for oil content without the effort cost or time of field trials of the sunflower seed plant.

With respect to the media developed by the inventor, only the minimal salts that the media use are based on Murashige and Skoog mineral salts medium (MS medium). MS medium is typically used for plant cell culture and is described in Murashige, T. and Skoog, F. (1962) *Physiologia Plantarium.*, 15:473-97.

The following minimal salts are typically found in the media:
magnesium sulfate·seven hydrate ($MgSO_4 \cdot 7H_2O$),
calcium chloride·dihydrate ($CaCl_2 \cdot 2H_2O$),
potassium nitrate ($KNO_3$),
ammonium nitrate ($NH_4NO_3$),
potassium phosphate ($KH_2PO_4$),
manganese sulfate·four hydrate ($MnSO_4 \cdot 4H_2O$),
zinc sulfate·seven hydrate ($ZnSO_4 \cdot 7H_2O$),
cupric sulfate·five hydrate ($CuSO_4 \cdot 5H_2O$),
cobalt chloride·six hydrate ($CoCl_2 \cdot 6H_2O$
potassium iodide ($KI$),
boric acid ($H_3BO_3$),
sodium molybdinum oxide·dihydrate ($Na_2MoO_4 \cdot 2H_2O$),
ferrous sulfate·seven hydrate ($FeSO_4 \cdot 7H_2O$), and
sodium ethylenediaminotetracetic acid ($Na_2EDTA$).
In general, as used in the invention, the exact concentration of the salts can be varied within limits without departing from the invention. To standardize the making of the media, however, the concentrations of the above listed minimal salts are as follows:

| | |
|---|---|
| $MgSO_4 \cdot 7H_2O$ | 370 milligrams/liter (mg/l) |
| $CaCl_2 \cdot 2H_2O$ | 440 mg/l |
| $KNO_3$ | 1900 mg/l |
| $NH_4NO_3$ | 1650 mg/l |
| $KH_2PO_4$ | 170 mg/l |
| $MnSO_4 \cdot 4H_2O$ | 22.3 mg/l |
| $ZnSO_4 \cdot 7H_2O$ | 8.6 mg/l |
| $CuSO_4 \cdot 5H_2O$ | 0.025 mg/l |

| | |
|---|---|
| $CoCl_2 \cdot 6H_2O$ | 0.025 mg/l |
| KI | 0.83 mg/l |
| $H_3BO_3$ | 6.2 mg/l |
| $Na_2MoO_4 \cdot 2H_2O$ | 0.25 mg/l |
| $FeSO_4 \cdot 7H_2O$ | 28.75 mg/l |
| $Na_2EDTA$ | 37.25 mg/l |

Depending upon the particular use for which the media is formulated, a number of vitamins are added to the medium in the following amounts:

| | |
|---|---|
| inositol | up to and including about 500 mg/l; |
| thiamine·HCL | up to and including about 40 mg/l; |
| nicotinic acid | up to and including about 20 mg/l; |
| pyridoxine·HCl | up to and including about 4 mg/l. |

In one form, generally used for shoot formation, as described further hereinbelow, glycine is also added up to and including about 2 mg/l. In general the amount of the various vitamins will vary as used in the mixture, depending upon the particular purpose for which the medium is used, however, the vitamins will generally be in an amount sufficient to sustain vigorous growth of the sunflower explant or callus suspension to be grown in the particular medium.

Also depending upon the particular use to which the medium will be put, plant hormones are added. The plant hormones which may be used include auxins and cytokinins, however, when it is desired to generate multiple shoots or adventitious shoots, no auxin type hormone is used.

Various auxin-type hormones have been used in the media and are exemplified by naphthalene acetic acid (NAA), indole butyric acid (IBA), indoleacetic acid (IAA) and 2,4-dichlorophenoxyacetic acid (2,4-D). The auxins have been used at various concentrations in the media and in general the results obtained vary within the range of concentrations for the auxins that have been tried. The concentration ranges for the various auxins are as follows:

| | |
|---|---|
| NAA | about 0.01-10 mg/l; |
| IBA | about 1-10 mg/l; |
| IAA | about 1-4 mg/l; |
| 2,4-D | about 0.01-1 mg/l. |

Various cytokinin type hormones have been used in the media and are exemplified by benzyl adenine (BA), zeatin (Z), kinetin (K) and $N^6_2$ isopentyl adenine (2iP). The cytokinin hormones have also been used at various concentrations in the various media and in general the results obtained vary within the range of concentrations for the cytokinin that have been tried. The concentration ranges for the various cytokinins are generally between about 0.1 mg/l to about 10 mg/l. Generally BA and K are preferred for shoot multiplication and adventitious shoot induction.

In addition to the above-mentioned components, all the media contain sucrose. The concentration of sucrose may vary but generally an amount sufficient to permit sustained growth of the sunflower explants, callus or cells will be included. Typically, the sucrose concentration will be about 3% (w/v) or about 30 grams per liter final volume of medium.

The media may also include an amount of coconut water (Grand Island Biochemical Company), in a range up to about 50% v/v of the medium. For callus induction, however, the coconut water may be used optionally. If the medium is to be used for shoot multiplication or adventitious shoot formation, the coconut water is generally omitted.

Lastly, if solid media is required for either callus induction shoot tip multiplication or adventitious shoot formation, a hardening agent such as agar, in an amount sufficient to yield hard medium, generally about 6% (wt/v) is added.

Formulations for the various media and the uses thereof will be better understood from the following examples. It is to be understood that these examples are not intended to be limiting. Thus, variations in the growth charactertistics of the various plant tissue is expected.

### EXAMPLE I

The pericarp or hull is removed from <u>Helianthus</u> <u>annuus</u> 89B sunflower fruits. The seeds are removed from the fruits and sterilized for 15 minutes in 30% bleach with 1-2 drops dishwashing soap. Following rinsing in sterile distilled water, the seeds are planted in test tubes, 2 per tube, in a medium of 0.5% sucrose, 1% agar and the following salts in the concentrations indicated:

| | |
|---|---|
| $MgSO_4 \cdot 7H_2O$ | 370 mg/l; |
| $CaCl_2 \cdot 2H_2O$ | 440 mg/l; |
| $KNO_3$ | 1900 mg/l; |
| $NH_4NO_3$ | 1650 mg/l; and |
| $KH_2PO_4$ | 170 mg/l. |

The seeds are germinated in the dark for 4-5 days, followed by 1-2 days in the light. Two millimeter (mm) hypocotyl segments are then placed on the following medium:

| | |
|---|---|
| $MgSO_4 \cdot 7H_2O$ | 370 mg/l |
| $CaCl_2 \cdot 2H_2O$ | 440 mg/l |
| $KNO_3$ | 1900 mg/l |
| $NH_4NO_3$ | 1650 mg/l |
| $KH_2PO_4$ | 170 mg/l |
| $MnSO_4 \cdot 4H_2O$ | 22.3 mg/l |
| $ZnSO_4 \cdot 7H_2O$ | 8.6 mg/l |
| $CuSO_4 \cdot 5H_2O$ | 0.025 mg/l |
| $CoCl_2 \cdot 6H_2O$ | 0.025 mg/l |
| KI | 0.83 mg/l |
| $H_3BO_3$ | 6.2 mg/l |
| $Na_2MoO_4 \cdot 2H_2O$ | 0.25 mg/l |
| $FeSO_4 \cdot 7H_2O$ | 28.75 mg/l |
| $Na_2EDTA$ | 37.25 mg/l |
| inositol | 100 mg/l |
| thiamine· HCl | 40 mg/l |
| nicotinic acid | 20 mg/l |
| pyridoxine·HCl | 1 mg/l |
| $\propto$ -naphthaleneacetic acid | 1 mg/l |
| benzyladenine | 1 mg/l |
| sucrose | 30 grams/l |
| $H_2O$ distilled | to 1000 ml |
| pH | 6.3 |
| agar | 6.0 gms |

The 2 mm hypocotyl segments are cultured in the dark for 2 weeks. Friable callus is removed and subcultured on the same medium. Friable callus can be maintained and transferred to such medium every 2 weeks.


EXAMPLE II

The pericarp or hull is removed from Helianthus annuus 89B sunflower fruits. The seeds are removed and are sterilized for 15' in 30% bleach with 1-2 drops dishwashing soap. Following rinsing in sterile distilled water, the seeds are planted, 2 per tube, in a medium 0.5% sucrose, 1% agar and the time following minimal salts at the following concentrations:

| | |
|---|---|
| $KH_2PO_4$ | 170 mg/l |

| | |
|---|---|
| NH4NO3 | 1650 mg/l |
| KNO3 | 1900 mg/l |
| CaCl2·2H2O | 440 mg/l |
| MgSO4·7H2O | 370 mg/l. |

The seeds are germinated in the dark for 4-5 days followed by 1-2 days in the light. The apical tips with shoot primordia intact are removed from the seedlings by cutting with a sterile scalpel, perpendicularly to the longitudinal axis of the seedling. The shoot tip is then cut in half along the longitudinal axis of the shoot tip. The cut shoot tips are placed on a shoot growth medium having the following composition:

| | |
|---|---|
| MgSO4·7H2O | 370 mg/l |
| CaCl2·2H2O | 440 mg/l |
| KNO3 | 1900 mg/l |
| NH4NO3 | 1650 mg/l |
| KH2PO4 | 170 mg/l |
| MnSO4·4H2O | 22.3 mg/l |
| ZnSO4·7H2O | 8.6 mg/l |
| CuSO4·5H2O | 0.025 mg/l |
| CoCl2·6H2O | 0.025 mg/l |
| KI | 0.83 mg/l |
| H3BO3 | 6.2 mg/l |
| Na2MoO4·2H2O | 0.25 mg/l |
| FeSO4·7H2O | 28.75 mg/l |
| Na2EDTA | 37.25 mg/l |
| inositol | 100 mg/l |
| thiamine·HCl | 0.1 mg/l |
| nicotinic acid | 0.5 mg/l |
| pyridoxine·HCl | 0.5 mg/l |
| glycine | 2/0 mg/l |
| benzyladenine | 0.5 mg/l |
| or | |
| kinetin | 1.0 mg/l |
| sucrose | 30 grams/l |
| H2O distilled | to 1000 ml final volume |
| pH | 6.3 |
| agar | 6.0 gms |

The half shoot apices were cultured on this medium in the light for approximately 2 months and were transferred to new medium approximately every 3 weeks during this period. The plants were scored for formation of multiple shoots, rooting, flowering and formation of adventitious shoots at 3 weeks. Adventitious shoots are defined as shoots formed from cells that are not part of a preformed shoot meristem.

On the half shoot apices explanted from _Helianthus_ 89B, multiple shoots and new leaves grew from the shoot primorida. The shoots were

8

removed from the culture medium and placed into hormone free (i.e., lacking BA or K) medium and, when roots formed, were planted in the greenhouse.

EXAMPLE III

Sunflower seeds of Stauffer inbred line SS 405B, were germinated as in Example II above. SS 405B is described in Application for Plant Variety Protection Certificate Plant Variety Protection Office Number 8300132. Shoot tips were obtained and divided as in Example II above and placed on the medium described in Example II above.

At about 3 weeks after placement on the shoot growth medium, multiple shoots and leaves had already grown from the shoot tips and adventitious shoots were observed forming on the leaves of the explant.

EXAMPLE IV

Rooting of shoots developed by the procedures described in Example II above is carried out as follows. Multiple shoots are induced using the media and methods described in Example II except that if benzyladenine is used its concentration is kept at or below 0.1 mg/l. Benzyladenine concentrations of 0.5 mg/l allowed no root formation. If kinetin is used its concentration is kept at or below 1.0 mg/l.

Multiple shoots are removed from the shoot apex explant and are placed on the following media with or without hormones as indicated in Table I below: $B_5$ medium (Gamborg et al., (1968) Exp. Cell. Res., 50: 151-158); White's medium (White, P.r. (1963) The Cultivation of Animal and Plant Cells, 2nd Ed., Ronald Press, N.Y.); MS medium (Murashige, T. and Skoog, F., (1962) Physiol. Plant. 15: 473-497) and no salts medium comprised of water, 0.6% agar and 3% sucrose. B5, MS and White's media were tested with and without 3% sucrose. The following Table reflects the results of these rooting experiments.

TABLE I

| Medium | Hormone | | | Total % |
|---|---|---|---|---|
| no salt | 0.5 mg/1 BA 0/4 | 1 mg/1k . 2/4 | none 4/4 | rooted 6/12 50% |
| no salt + 3% sucrose | 0/4 | 2/4 | 3/3 | 5/11 45% |
| MS | 0/4 | 0/3 | 2/4 | 2/11 18% |
| MS + 3% sucrose | 0/3 | 0/3 | 3/4 | 3/10 30% |
| B5 | 0/4 | 1/4 | 4/4 | 5/12 41% |
| B5 + 3% sucrose | 0/3 | 1/3 | 4/4 | 5/10 50% |
| W | 0/4 | 1/4 | 3/3 | 4/11 36% |
| W + 3% sucrose | 0/3 | 4/4 | 3/3 | 7/10 70% |
| Total | 0/29 = 0% | 11/29 = 38% | 26/29 = 90% | |

```
Total no sucrose   17/46 = 37%
Total 3% sucrose   20/41 = 49%
       no salts    11/23 = 50%
            MS      5/21 = 24%
            B5     10/22 = 45%
        Whites     11/21 = 52%
```

Once roots had formed on the shoots, the medium was rinsed off with tap water; the plants were placed in styrofoam cups with potting mix and the styrofoam cup was covered with a piece of clear plastic. After 4-7 days, the plastic cover was removed. One month later the rooted plants were transferred to larger pots and grown to maturity in the greenhouse. The plants thus produced set flowers and produced seeds upon maturation.

EXAMPLE V

Multiple sunflower shoots that failed to root in Example IV hereinabove were grafted to rooted sunflower plants in a modification of the method of Habermann and Wallace, Habermann, H.M. and Wallace, R.H., (1958), Am. J. Bot., 5: 479-482. The shoots were removed from the rooting medium. The epicotyl was trimmed with a sterile razor blade to form a substantially V-shaped wedge which served as a graft.

Root stocks were provided by growing germinated seeds of inbred sunflower seed lines of SS405B or 89B for five days to two weeks to yield seedlings. The seelings were prepared to receive the grafts by making a first cut through the hypocotyl of the seedling closely below the cotyledon in a plane substantially perpendicular to the long axis of the seedling. The hypocotyl was then incised in a plane substantially parallel to the long axis of the seedling and perpendicular through the first cut to form a slit. The graft was placed in the slit with the apex of the substantially V-shaped wedge oriented toward the roots of the root stock. The graft was secured in the slit by a single turn of knotted cotton thread. The graft was kept moist for 1-2 weeks by covering with an inverted jar, test tube or plastic bag. After 1-2 weeks, the cotton thread was removed and the graft was grown to maturity in the greenhouse. The grafts set flowers and seed upon maturation.

CLAIMS:

1.   A plant growth medium comprising

(a) minimal salts;

(b) vitamins comprising up to and including;
500 mg/l inositol, 40 mg/l thiamine HCl, 20 mg/l nicotinic acid, 40 mg/l pyridoxine HCl;

(c) plant hormones;

(d) sucrose;

(e) hardening agent; and having a pH in the range of from 5 to 6.5.

2.   A plant growth medium as claimed in claim 1 characterised in that said vitamins comprise the following approximate amounts of the compounds indicated:-

100 mg/l inositol,

0.1 mg/l thiamine HCl,

0.5 mg/l nicotinic acid, and

0.5 mg/l pyridoxine.HCl.

3.   A plant growth medium as claimed in claim 2 characterised in that it further includes glycine in an amount of 0-2 mg/l and further characterised in that the plant hormones are cytokinins.

4.   A plant growth medium as claimed in claim 3 characterised in that the cytokinins are selected from benzyl adenine, zeatin, kinetin and $N^6 \triangle_2$ isopentyl adenine, said cytokinins being in a concentration range of less than 2 mg/l and said sucrose being in a concentration of approximately 30 g/l.

5.   A plant growth medium as claimed in claim 4 characterised in that the benzyl adenine is in a concentration of approximately 0.5 mg/l.

6.   A plant growth medium as claimed in claim 4 characterised in that the kinetin is present at a concentration of approximately 1 mg/l.

- 12 -

0132360

7.   A plant growth medium as claimed in claim 1 characterised in that the hormones are cytokinins and auxins.

8.   A plant growth medium as claimed in claim 7 characterised in that the auxins are selected from

$\alpha$-naphthalene acetic acid

indolebutyric acid

indolacetic acid

2,4-dichlorophenoxyacetic acid;   and

the cytokinins are selected from

benzyl adenine,

zeatin,

kinetin, and

$N^6\triangle_2$ isopentyladenine.

9.   A plant growth medium as claimed in claim 8 characterised in that the concentrations of said auxins are approximately 0.01-10 mg/l $\alpha$-naphthalene acetic acid, 1-10 mg/l indolebutyric acid, 1-4 mg/l indolacetic acid, and 0.1-1 mg/l 2,4-dichlorophenoxyacetic acid.

10.   A plant growth medium as claimed in claim 9 characterised in that the $\alpha$-naphthalene acetic acid is present in an amount of approximately 1 mg/l and said benzyl adenine is present in an amount of approximately 1 mg/l.

11.   A plant growth medium as claimed in any of claims 7 to 10 characterised in that the vitamins comprise the following approximate amounts of the compounds indicated:

100 mg/l inositol;

40 mg/l thiamine.HCl;

20 mg/l nicotinic acid; and

1 mg/l pyridoxine.HCl.

12. A method for producing sunflower callus comprising the steps of:

    (a) providing the medium defined in claim 1, said medium being a callus inducing medium,

    (b) providing a tissue from a sunflower plant;

    (c) culturing said tissue on said callus inducing medium in the dark at a temperature between 24-28°C until callus forms.

13. The method of producing multiple sunflower shoots comprising the steps of

    (a) providing the medium defined in claim 2, said medium being a shoot forming medium

    (b) providing at least a portion of at least one sunflower shoot tip; and

    (c) culturing said portion of said shoot tip on said shoot forming medium at 24-28°C until shoots form on said sunflower shoot tip.

14. The method for producing adventitious shoots in sunflower plants comprising the steps of:

    (a) providing the medium defined in claim 2, said medium being a shoot forming medium;

    (b) providing at least a portion of at least one sunflower shoot tip obtained from a sunflower line capable of forming adventitious shoots; and

    (c) culturing said portion of said shoot tip obtained from a sunflower strain capable of forming adventitious shoots on said shoot-forming medium at 24-28°C until leaves form on said sunflower shoot tip and adventitious shoots form on said leaves.

15. A method for vegetatively propagating sunflower plants comprising:

    (a) producing multiple sunflower shoots by the steps of

        (i) providing the medium defined in claim 2, said medium being a shoot forming medium;

        (ii) providing at least a portion of at least one

0132360

sunflower shoot tip;

    (iii) culturing said portion of said sunflower
shoot tip on said shoot forming medium
until multiple shoots form on said sunflower
shoot tip;

    (b)   grafting said multiple sunflower shoots onto
root stocks, and

    (c)   growing said grafted sunflower shoots.


16.   The method for vegetatively propogating sunflower
plants comprising

    (a) producing multiple sunflower shoots by the steps of

      (i) providing the medium defined in claim 2, said
medium being a shoot forming medium;

     (ii) providing at least a portion of at least one
sunflower shoot tip;

    (iii) culturing said portion of said sunflower shoot
tip on said shoot forming medium until
multiple shoots form on said sunflower shoot
tip;  and

    (b)   rooting said sunflower shoots in a root-forming
medium, and

    (c)   growing said rooted sunflower shoots.

17.   Sunflower plants produced by a method as claimed in
claim 15 or claim 16.


18.   Sunflower seeds produced by a method as claimed in
claim 15 or claim 16.